# EUROPEAN PATENT SPECIFICATION

(11) **EP 3 018 998 B1**
(45) Date of publication and mention of the grant of the patent: **05.09.2018**
(21) Application number: 14741969.1
(22) Date of filing: 08.07.2014
(51) Int. Cl.: A01G 9/029, A01G 24/00

(54) **CULTIVATING DEVICE**
KULTIVIERUNGSVORRICHTUNG
DISPOSITIF POUR MISE EN CULTURE

(30) Priority: 08.07.2013 NL 2011119
(43) Date of publication of application: 18.05.2016
(73) Proprietor: Forteco B.V., 2295 RZ Kwintsheul (NL)
(72) Inventor: DE SMET, Jan Roger Henri, B-9870 Zulte (BE)
(74) Representative: Algemeen Octrooi- en Merkenbureau B.V.
(86) International application number: PCT/NL2014/050457
(87) International publication number: WO 2015/005775

(56) References cited:
- EP-A1- 0 473 847
- EP-A1- 1 969 920
- EP-A2- 1 938 679
- US-A1- 2003 041 516
- US-A1- 2009 031 627

## Description

The present invention relates to a cultivating device designed for raising plants, comprising an at least substantially non-shape-retaining amount of substrate enveloped by a flexible substrate envelope which holds the substrate together during the raising and associated handling of a plant at least substantially in a shape-retaining form of a cube, a beam or a cylinder that is suitable for cultivating purposes. Said defined shape-retaining form is important, because it makes it possible to handle the cultivating device manually or mechanically during various stages of the raising process, but also afterwards. Said handling comprises, inter alia, manually and/or mechanically picking up and moving one or more cultivating devices.

It is generally known in vegetable cultivation to raise plants, in particular young plants, in a block of rock wool, for example measuring 10 x 10 x 6.5 cm, in the upper side of which a seed or a seedling is placed. The vertical walls of the block are surrounded by a plastic film to make mechanical handling of the blocks at the grower's possible and to prevent or at least avoid desiccation of the rock wool. The bottom side of the block is open so as to allow moistening of the block through capillary rise and to allow the young plant to root into the substrate at the grower's.

It is known to use non-shape-retaining substrates instead of rock wool as a cultivation material. A drawback of non-shape-retaining substrates, however, is that holding said substrates together in a correct shape is difficult. It is difficult because the cultivating device to be moved is usually handled by mechanical means at the grower's. It has therefore been proposed to pack non-shape-retaining substrates in containers of plastic material provided with drainage openings at the bottom side, which containers give an amount of non-shape-retaining substrate a correct shape and retain said shape. A drawback, however, is that said containers of plastic material may eventually cause problems concerning the rooting of the young plants in the substrate when the young plants are planted on the substrate at the grower's and/or that said containers eventually involve a waste problem. When the containers are removed for reuse when the young plants are planted, such containers, when reused, may be a source of disease and infections for the young plants at the nursery and for the cultivation at the grower's.

Accordingly an object of the present invention is to provide a cultivating device as described in claim 1, wherein the substrate envelope of the cultivating device need not be removed when the young plants are planted, wherein the rooting of the plants in the substrate can take place without any problems and/or wherein the waste problem is solved or at least alleviated. This object is achieved by the invention in that the substrate envelope is made of a water-permeable layer of material, for example a material through which roots can grow. The water-permeable or, in other words, substantially continuous or plane-filling layer of material, is substantially uninterrupted so as to be able to make a firm envelope of the substrate. The material of the water-permeable layer of which the envelope is made ensures, however, that moisture can exit the container also through the sides and/or the upper side of the container, for example when the moisture concentration in a cultivating device is relatively high. On the other hand, because of the fact that the envelope is substantially continuous or plane-filling, with the exception of an opening at the upper side through which a seed or a seedling can be placed in the substrate, less moisture will evaporate from the substrate than in the case of a pot with an open upper side. In contrast to pots with an open upper side, the substantially continuous or plane-filling envelope prevents material being lost from the envelope due to spillage during manual or mechanical handling. This prevents fouling of the shop floor or the environment in which cultivating devices according to the present invention are being handled. The flexibility of the material is an advantageous aspect, because it makes it possible to allow the envelope to collapse so as to realise a saving of space when a compressed substrate is accommodated in the substrate envelope in compact condition and to have the substrate increase in volume in the substrate envelope upon when moistening takes place, with the substrate envelope allowing the volume increase to a certain extent but eventually also limiting said volume increase and bounding the enveloped substrate in the desired form. Using a substantially continuous or plane-filling shape retaining envelope this would not be possible, unless the upper wall would be removed and the container thus formed would moreover be configured as a nestable container. The phrase "layer of material" as used herein is used not so much to indicate the starting material of which the substrate envelope is made but rather the substantially closed product of which the envelope is made. Said product may be a fabric or a sheet which in principle is not water-permeable but in which perforations are provided so as to give the sheet water-permeable properties and allow roots to grow therethrough. In a preferred embodiment according to the present invention it may also be a net, but in that case the meshes may not be larger than 10 mm so as to prevent loss of substrate on the floor.

It is known, to be sure, to use a paper envelope with a substrate which is not shape-retaining of itself, i.e. the material may consist of shape-retaining elements but is not capable of retaining its block shape without support. Moist paper is inherently subject to a greater risk of tearing. In particular the risk of tearing of the paper envelope for the substrate upon being picked up and moved manually and/or by mechanical means is considerable. This is why a paper envelope is not shape-retaining, or at least not to a sufficient degree, in the sense of the present document.

US 2009/0031627 A1 describes a shape-retaining plant pot having an open upper side and a linen root bag which envelopes the roots of a plant and growth medium in an undefined shape. No suggestion whatsoever is made in the description of the embodiment of the bag that the bag envelopes the substrate in a shape-defining manner. On the contrary, in one of the embodiments the envelope is placed in a cement container.

EP 1 969 920 A1 describes a sowing vessel, or platform, of organic fibres for seedlings and plants that is made of a biodegradable material comprising fibres and a binder, which is thus shape-retaining. No indication is given of the substrate being enveloped in its entirety.

EP 0 473 847 A1 describes a plant pot for raising plants, which is made of fibres. The plant pot is shape-retaining has an open upper side.

EP 1 938 679 A2 describes a biodegradable plant pot made of rice straw and coir, at least one surface of which has been sprayed with a natural latex. The pot is thus a shape-retaining pot. The pot has an open upper side.

US 2003/0041516 describes a shape-retaining plant pot having an open upper side.

It is preferable that the substrate envelope is designed to allow water in liquid form to pass, but allowing water in the form of water vapour to permeate is already an advantageous property of the water-permeable layer of the substrate envelope, which helps prevent or at least reduce any undesirable accumulation of water in the substrate.

It is preferable that the substrate is at least substantially entirely enclosed by the water-permeable material of the substrate envelope. That is, the material surrounds the substrate substantially tightly. Such a substrate envelope may however be provided with functional openings, for example an opening at the upper side via which a seed or a seedling can be placed in the substrate, or drainage openings in the bottom through which any excess moisture can easily flow out of the cultivating device.

According to the present invention, the substrate may be in a compressed condition prior to use and swell upon first moistening, not obtaining its shape retaining property referred to in claim 1 until said first moistening has taken place. Because the substrate envelope is made of a flexible material, the substrate envelope must be made so that it will assume the correct shape upon swelling of the substrate insofar as the cultivating device does not have the desired shape prior to moistening. This shape-retaining property is further provided in that the substrate tends to push the substrate envelope apart from the inside. The tensile force of the substrate envelope in that case contributes to obtaining and/or maintaining the desired shape and the desired strength of the substrate. In this case, too, a paper substrate envelope would involve a major risk of tearing after moistening and/or during the swelling of the substrate. The swelling of the substrate takes place in a relatively uncontrolled manner. The degree of swelling and also the direction in which it takes place cannot be precisely predicted. The envelope must impart the correct shape during the aforesaid swelling and retain said shape after said swelling. In this respect, too, paper is not shape-retaining in the sense of the present document.

In a preferred embodiment of the present invention, the water-permeable material mainly comprises fibres. An envelope that is made, for example woven or braided, of fibres provides a possibility of water permeating between the substantially adjoining fibres.

If the water-permeable material comprises a biodegradable material, it becomes possible to produce a cultivating device which is substantially entirely biodegradable. This obviates the need to separate the substrate and the substrate envelope of the cultivating device after use.

Although it is possible to make the substrate envelope of a biodegradable synthetic material, for example a plastic sheet made water-permeable by being provided with perforations, it is preferable for environmental reasons that the water-permeable material comprises an organic material.

Preferably, the water-permeable material comprises jute. Jute combines the preferred properties of the substrate envelope, such as water-permeability, tensile strength and degradability. Moreover, jute is readily available at relatively low cost in the form of cloths made of braided-together jute fibres and/or yarns.

It is preferable if the substrate comprises an organic material as the cultivating material. The organic material is degradable and thus contributes to the environmental-friendliness of the cultivating device.

In a preferred embodiment of the present invention, the substrate comprises coir material, preferably coir dust or other coir substrates. Coir has proved to be an excellent cultivating material which has moisture-retaining properties that are very suitable for raising purposes. In addition, it is an organic material. According to the invention, the substrate is compressed prior to use to increase in volume by at least 100%, preferably at least 200%, more preferably 300%, upon being moistened. This achieves that a cultivating device only takes up a limited part of the volume prior to use in comparison with the volume during raising. This saves on storage and transport costs of the cultivating device prior to use.

The present invention will now be explained in more detail with reference to a preferred embodiment of the invention and with reference to the appended figures, in which:

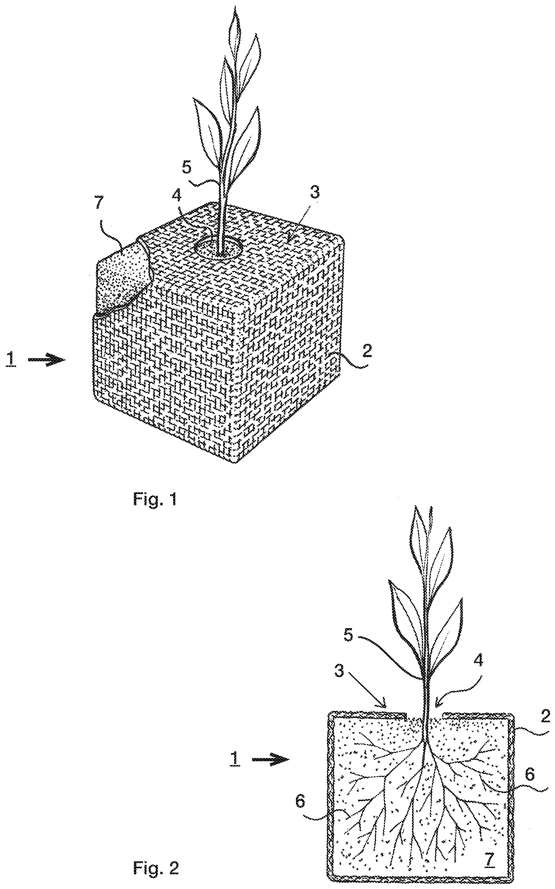

Figure 1 is a perspective view of a preferred embodiment of a cultivating device according to the present invention; and
Figure 2 is a vertical midsectional view of the cultivating device of figure 1.

With reference now to the figures, there is shown a perspective view and a vertical mid sectional view, respectively, of a preferred embodiment of a cultivating device 1 according to the present invention. The cultivating device comprises an envelope 2 of jute cloth in the form of a cube. Provided in an upper surface 3 of the cube is an opening 4, through which the stem 5 of a plant (not shown) extends. The plant has roots 6 which grow in a substrate 7 of coir dust. The jute envelope 2 holds the loose dust of the substrate 7 together in the form of a cube.

In use, the cultivating device 1 is periodically moistened from above or from below, with the water moistening the substrate through the jute cloth as a result of the capillary action of the substrate. In the case of other, less water-permeable envelopes according to the invention it may be desirable to moisten the substrate via the opening 4. The moisture being supplied penetrates the coir substrate 7. The coir substrate 7 retains moisture to some degree, but in the case of sufficient saturation the moisture can seep through downward. It has thus been found that the roots 6 of the plant can grow in a sufficiently moist environment.

A possible consequence of the supplying of moisture to the substrate 7 may be that the coir substrate 7 slightly expands. In particular if the envelope 2 is only partly filled with relatively dry substrate 7, as is the case in a preferred embodiment, which is made to swell by the addition of moisture until the envelope 2 is completely filled, the envelope 2 must hold the substrate 7 together in the desired cube shape. In other words, the risk of the substrate 7 forcing the envelope 2 apart must be prevented or at least substantially minimised. The jute is more than strong enough to resist undesirable expansion of the substrate.

If, due to circumstances, a great deal of moisture accumulates in the substrate 7, excess moisture can exit the substrate 7 via the jute envelope 2. This is in contrast to a non-water-permeable envelope, in which the water is confined between the side walls and the bottom. Cuts are made in a bottom of a prior art envelope, to be sure, but said cuts only provide very local possibilities of escape, which in addition can easily become obstructed, so that excess water cannot flow out, or at least not to a sufficient extent. As according to the invention the envelope as a whole is provided with a water-permeable envelope layer 2, excess moisture can escape through all the walls, even by evaporation through the upper surface 3.

After use of the cultivating device, there is no need to separate the jute 2 and the substrate 7 from each other. The cultivating devices 1 can be disposed of as a whole, for example for composting.

In the appended figures and the above text, the invention has been explained with reference to merely one preferred embodiment. It will be understood, however, that many variants, which may or may not be obvious to the skilled person, are possible within the scope of the present invention as defined in the appended claims. Thus, the substrate may comprise another organic or non-organic substrate of a non-shape-retaining material. It is also possible to use another fabric or a web of intertwined fibres instead of jute. It is also possible to use a layer of material which in itself is not water-permeable, but which has been rendered water-permeable, for example by being provided with small perforations, whilst retaining the shape-retaining property of the cultivating device comprising a flexible (in principle) envelope and a substrate whose fixed shape is imparted by the envelope.

## Claims

1. A cultivating device (1) designed for raising plants, comprising a non-shape-retaining amount of substrate (7) enveloped by a flexible substrate envelope (2), wherein the substrate envelope (2) is made of a water-permeable layer of material, **characterised in that**, the flexible envelope (2) holds the substrate (7) together during the raising and associated handling of a plant in a shape-retaining form of a cube, a beam or a cylinder that is suitable for cultivating purposes, wherein the substrate (7) is substantially entirely enclosed by the water-permeable material of the substrate envelope (2), wherein substrate (7) is compressed prior to use to increase in volume by at least 100%, preferably at least 200% or 300%, upon being moistened.

2. A cultivating device according to claim 1 or 2, **characterised in that** at least one functional opening is provided in the substrate envelope.

3. A cultivating device (1) according to one or more of the preceding claims, **characterised in that** the water-permeable material mainly comprises fibres.

4. A cultivating device (1) according to one or more of the preceding claims, **characterised in that** the water-permeable material comprises a biodegradable material.

5. A cultivating device (1) according to one or more of the preceding claims, **characterised in that** the water-permeable material comprises an organic material.

6. A cultivating device (1) according to one or more of the preceding claims, **characterised in that** the water-permeable material comprises jute.

7. A cultivating device (1) according to one or more of the preceding claims, **characterised in that** the substrate (7) comprises an organic material as cultivating material.

8. A cultivating device (1) according to claim 7, **characterised in that** the organic material of the substrate(7) comprises coir.

## Patentansprüche

1. Kultiviervorrichtung (1) ausgelegt zur Aufzucht von Pflanzen, umfassend eine nicht formbeständige Menge von Substrat (7) umhüllt von einer flexiblen Substrathülle (2), wobei die Substrathülle (2) aus einer wasserdurchlässigen Materiallage besteht,
**dadurch gekennzeichnet, dass**
die flexible Hülle (2) das Substrat (7) während der Aufzucht und damit verbundener Handhabung einer Pflanze in einer formbeständigen Form eines Würfels, eines Balkens oder eines Zylinders zusammenhält, welche für Kultivierungszwecke geeignet ist, wobei das Substrat (7) im Wesentlichen vollständig durch das wasserdurchlässige Material der Substrathülle (2) eingeschlossen ist, wobei Substrat (7) vor der Verwendung komprimiert wird, um bei Befeuchtung im Volumen um wenigstens 100%, vorzugsweise wenigstens 200% oder 300%, anzusteigen.

2. Kultiviervorrichtung nach Anspruch 1 oder 2,
**dadurch gekennzeichnet, dass**
wenigstens eine funktionale Öffnung in der Substrathülle vorgesehen ist.

3. Kultiviervorrichtung (1) nach einem oder mehreren der voranstehenden Ansprüche,
**dadurch gekennzeichnet, dass**
das wasserdurchlässige Material hauptsächlich Fasern umfasst.

4. Kultiviervorrichtung (1) nach einem oder mehreren der voranstehenden Ansprüche,
**dadurch gekennzeichnet, dass**
das wasserdurchlässige Material ein biologisch abbaubares Material umfasst.

5. Kultiviervorrichtung (1) nach einem oder mehreren der voranstehenden Ansprüche,
**dadurch gekennzeichnet, dass**
das wasserdurchlässige Material ein organisches Material umfasst.

6. Kultiviervorrichtung (1) nach einem oder mehreren der voranstehenden Ansprüche,
**dadurch gekennzeichnet, dass**
das wasserdurchlässige Material Jute umfasst.

7. Kultiviervorrichtung (1) nach einem oder mehreren der voranstehenden Ansprüche,
**dadurch gekennzeichnet, dass**
das Substrat (7) ein organisches Material als Kultivierungsmaterial umfasst.

8. Kultiviervorrichtung (1) nach Anspruch 7,
**dadurch gekennzeichnet, dass**
das organische Material des Substrats (7) Kokosfasern umfasst.

## Revendications

1. Dispositif de culture (1) conçu pour faire pousser des plantes, comprenant une quantité déformable de substrat (7) enveloppée par une enveloppe de substrat flexible (2), dans lequel l'enveloppe de substrat (2) est réalisée en une couche de matériau perméable à l'eau, **caractérisé en ce que** l'enveloppe flexible (2) maintient l'ensemble du substrat (7) pendant la culture et la manipulation associée d'une plante, sous forme indéformable d'un cube, d'un profilé ou d'un cylindre qui est appropriée pour des fins de culture, où le substrat (7) est sensiblement entièrement entouré par le matériau perméable à l'eau de l'enveloppe de substrat (2), où le substrat (7) est comprimé avant l'utilisation pour augmenter son volume d'au moins 100%, de préférence d'au moins 200 % ou 300%, après avoir été humidifié.

2. Dispositif de culture selon la revendication 1 ou 2, **caractérisé en ce qu'**au moins une ouverture fonctionnelle est prévue dans l'enveloppe de substrat.

3. Dispositif de culture (1) selon l'une ou plusieurs des revendications précédentes, **caractérisé en ce que** le matériau perméable à l'eau comprend principalement des fibres.

4. Dispositif de culture (1) selon l'une ou plusieurs des revendications précédentes, **caractérisé en ce que** le matériau perméable à l'eau comprend un matériau biodégradable.

5. Dispositif de culture (1) selon l'une ou plusieurs des revendications précédentes, **caractérisé en ce que** le matériau perméable à l'eau comprend un matériau organique.

6. Dispositif de culture (1) selon l'une ou plusieurs des revendications précédentes, **caractérisé en ce que** le matériau perméable à l'eau comprend du jute.

7. Dispositif de culture (1) selon l'une ou plusieurs des revendications précédentes, **caractérisé en ce que** le substrat (7) comprend un matériau organique en tant que matériau de culture.

8. Dispositif de culture (1) selon la revendication 7, **caractérisé en ce que** le matériau organique du substrat (7) comprend de la fibre de coco.
